# EUROPEAN PATENT SPECIFICATION

(11) **EP 0 607 659 B1**
(45) Date of publication and mention of the grant of the patent: **21.01.1998**
(21) Application number: 93309030.0
(22) Date of filing: 11.11.1993
(51) Int. Cl.: F23G 5/10

(54) **Refuse melting furnace**
Abfallschmelzofen
Four de fusion de déchets

(30) Priority: 28.12.1992 JP 360558/92
(43) Date of publication of application: 27.07.1994
(73) Proprietor: DAIDO TOKUSHUKO KABUSHIKI KAISHA, Naka-ku Nagoya-shi Aichi-ken (JP)
(72) Inventor: Kinto, Kouichiro, Yottukaichi-shi, Mie-ken (JP)
(74) Representative: Whalley, Kevin

(56) References cited:
- US-A- 2 098 586
- US-A- 3 079 450
- US-A- 4 697 532
- US-A- 4 773 630
- PATENT ABSTRACTS OF JAPAN vol. 10, no. 375 (M-545)13 December 1986 & JP-A-61 168 719 (NIPPON KOKAN KK) 30 July 1986

## Description

This invention relates to a refuse melting furnace, and more particularly to a rectangular type of refuse melting furnace.

A refuse melting furnace with a heat source such as arc discharging electrodes, electric resistance heating electrodes, or plasma torches is used to melt ashes of burnt refuse or industrial wastes containing combustible and incombustible substances and metals. There are two major types of such furnaces, namely a circular furnace and a rectangular furnace. To be more exact, one has a circular horizontal cross section, and the other has a rectangular horizontal cross section. Recently rectangular furnaces have been more widely used than circular ones because the former are easier to increase in volume and to maintain, and have a higher melting efficiency as well. The present invention accordingly relates to an improvement in a rectangular refuse melting furnace.

A conventional rectangular refuse melting furnace is disclosed in Japanese Patent Publication Tokkai 61-213510 where a melting furnace comprises a rectangular box-shaped body, a cover fixed on the top of the body, and plural arc discharging electrodes extending vertically through the cover. With the convention furnace, however, the hearth, which is formed of firebricks, is of a flat construction. In other words, the firebricks to form the hearth are so arranged as to make up a horizontal plane. Thus, the hearth is apt to be damaged. Also much molten metal is apt to remain on the hearth. In addition, with the conventional furnace, both molten slag and molten metal are discharged from one and the same discharge port and, hence, the two must be separated magnetically or otherwise in order to be able to reutilize the discharged substances as effective materials.

With the flat hearth, molten metal produced as the refuse is melted passes into the small openings between the firebricks which form the hearth, and then solidifies. Thereupon, the solidified metal more or less lifts those firebricks out of place, with the result that the surface of the hearth becomes uneven. Also, due to the unevenness of the hearth, much molten metal may remain on the hearth. Repairing such a hearth is very difficult, because the metal exists on it or between the firebricks in solidified state.

Attention is also drawn to the disclosures of US-A-4773630 and US-A-4697532.

The present invention aims to provide a rectangular type of refuse melting furnace which overcomes the difficulties associated with the prior art.

The present invention provides a rectangular type of refuse melting furnace, which comprises a furnace body with a rectangular horizontal cross section having two longer sides and two shorter sides, a furnace cover fixed on the top of said furnace body, and refuse heating elements (such as are discharging electrodes, electric resistance heating electrodes, or plasma torches) disposed vertically through said furnace cover, and a hearth having a downwardly-curved transverse cross section as viewed from shorter sides of said furnace body; wherein said refuse heating elements are arranged along a longitudinal centreline of said furnace cover at predetermined intervals, and refuse inlets are located through said furnace cover between said refuse heating elements; and wherein one of the longer sides of said furnace body is provided with discharge ports for molten slag, and one of the shorter sides of said furnace body is provided with a discharge port for molten metal which is located in close proximity to the downwardly curved hearth and being substantially centralised with respect to the transverse direction of said furnace body, characterised in that said discharge port for molten metal is defined by an upper end portion of a stream barrier by overflow and a discharge opening for molten metal is located in the stream barrier, and in that said upper end portion of said stream barrier is located at a lower position than said discharge ports for molten slag and said discharge opening is located adjacent the lowest position of the hearth.

The refuse heating elements are preferably electrodes or plasma torches, and in particular the said electrodes may be arc discharging electrodes for electric resistance heating electrodes.

With the invention, molten slag and molten metal are not discharged from one and the same discharge port, but discharge ports for the two different molten substances are provided separately. Refuse inlets and an exhaust gas vent are made through the furnace cover.

The refuse heating elements are arranged at predetermined intervals along a longitudinal centreline of the furnace cover. The refuse inlets are located between the heating elements, because by so doing the refuse put into the furnace can be effectively heated from opposed sides. As for the discharge ports for molten slag, more than one are provided on one of the longer sides of the furnace body at a predetermined interval, so that one of the discharge ports can be used when the other is repaired. As for the discharge port for molten metal, it should be provided on one of the shorter sides of the furnace body at a position lower than the discharge ports for molten slag. Moreover, it is required that the discharge port for molten metal be located in close proximity to the downwardly-curved hearth and be substantially centralised with respect to the transverse direction of the furnace body, in order to smoothly let the molten metal out from the furnace.

The invention will be further described, by way of example only, with reference to the accompanying drawings, in which:
Fig. 1 is a plan view of a refuse melting furnace which embodies the invention in one preferred form;
Fig. 2 is a vertical, transverse cross section of the furnace; and
Fig. 3 is a vertical, longitudinal cross section of one end portion of the furnace.

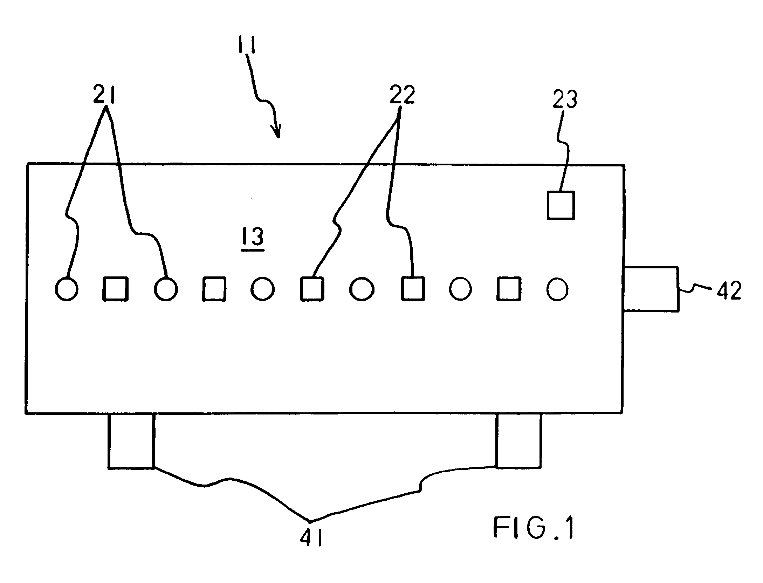

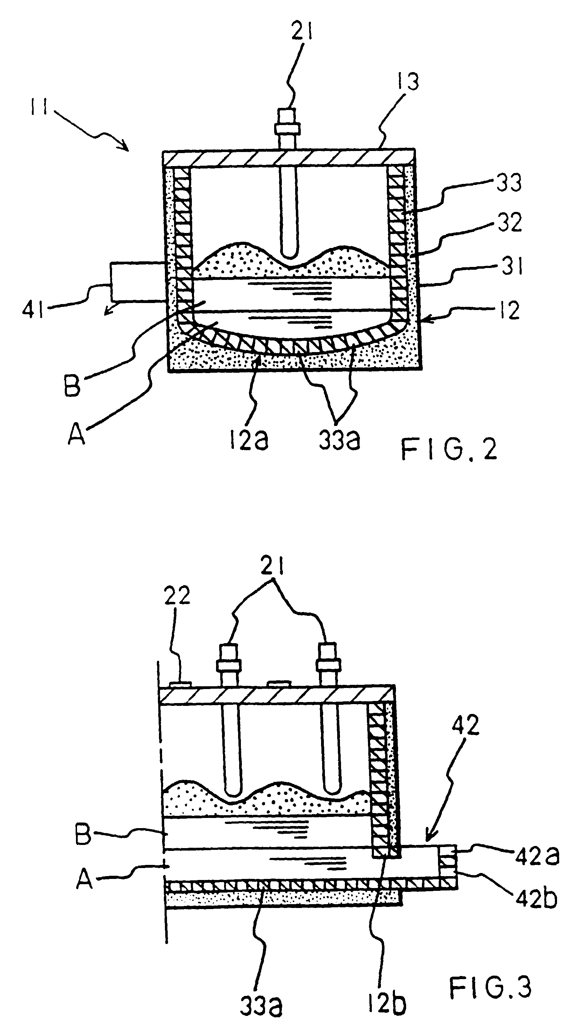

A refuse melting furnace 11 which embodies the invention in one preferred form will now be described in detail with reference to the drawing. The furnace 11 includes a furnace body 12 and a cover 13 fixed on the top of the furnace body 12. As may be appreciated from Fig. 1, the furnace body 12 has a rectangular horizontal cross section. As shown in Fig. 1, a total of six arc discharging electrodes 21 are arranged at regular intervals along a longitudinal centreline of the cover 13. It will be appreciated, however, that electric resistance heating electrodes or plasma torches may be used instead of the arc discharging electrodes. As clearly shown in Figs. 2 and 3, the electrodes 21 are disposed vertically through the cover 13. Between the electrodes 21 are located refuse inlets 22 which are made through the cover 13 (Fig. 1). In addition, an exhaust gas vent 23 is made through the cover 13 (Fig. 1).

As clearly shown in Figs. 2 and 3, the furnace body 12 includes a furnace shell 31 lined with firebricks 33. Refractories 32 are provided between the furnace shell 31 and the firebricks 33. Reference numeral 33a designates those of the firebricks 33 that form a hearth 12a. As clearly illustrated in Fig. 2, the hearth 12a has a downwardly - curved transverse cross section as viewed from the shorter sides of the furnace body 12. Two discharge ports 41 for molten slag are connected to one of the longer sides of the furnace body 12, and are spaced apart from each other by a predetermined distance (Figs. 1 and 2). On the other hand, one of the shorter sides of the furnace body 12 is provided with a discharge port 42 for molten metal (Figs. 1 and 3). This port 42 is located at a lower position than the discharge ports 41 for molten slag. Also, as shown in Fig. 3, the port 42 is located on an extension to the lowest portion of the hearth 12a.

In addition, the discharge port 42 for molten metal is defined by a stream barrier 42a projecting upwardly from the end of the foregoing extension and by a counter barrier 12b extending transversely for a certain distance along one of the shorter sides of the furnace body 12 so as to separate molten slag and molten metal. Thus, the molten metal A comes out from the furnace 11 by overflowing from the discharge port 42. Also, the stream barrier 42a is provided with a discharge opening 42b from which the molten metal A can be discharged deliberately when necessary.

As described above and as clearly illustrated in the drawing, the hearth 12a has a downwardly-curved transverse cross section. Of the firebricks 33a (to form the hearth 12a), therefore, the higher ones (those firebricks that are in higher positions) act to press against the lower ones, with the result that openings between the firebricks 33a, if any, are very small, compared with the openings between the firebricks to make up the flat hearth of the conventional rectangular type of melting furnace. In addition, with the curved hearth 12a, should the molten metal pass into the openings between the firebricks 33a and solidify, there would be little possibility that the firebricks 33a may be lifted out of place. For this reason, there is little danger of the surface of the hearth 12a becoming uneven and, hence, little danger of that surface being damaged. Also, for the same reason, there is little possibility that much molten metal may remain on the hearth 12a. Moreover, with the invention, since molten slag and molten metal are discharged from different ports, a subsequent separation of them is not required for reutilizing them as effective materials. They can be reutilized as such as they are.

## Claims

1. A rectangular type of refuse melting furnace (11), which comprises a furnace body (12) with a rectangular horizontal cross section having two longer sides and two shorter sides, a furnace cover (13) fixed on the top of said furnace body, and refuse heating elements (21) disposed vertically through said furnace cover, and a hearth (12a) having a downwardly-curved transverse cross section as viewed from shorter sides of said furnace body; wherein said refuse heating elements are arranged along a longitudinal centerline of said furnace cover at predetermined intervals, and refuse inlets (22) are located through said furnace cover between said refuse heating elements; and wherein one of the longer sides of said furnace body is provided with discharge ports (41) for molten slag (B), and one of the shorter sides of said furnace body is provided with a discharge port (42) for molten metal (A) which is located in close proximity to the downwardly curved hearth and being substantially centralized with respect to the transverse direction of said furnace body, characterised in that said discharge port (42) for molten metal (A) is defined by an upper end portion of a stream barrier (42a) by overflow and a discharge opening (42b) for molten metal (A) is located in the stream barrier (42a), and in that said upper end portion of said stream barrier (42a) is located at a lower position than said discharge ports (41) for molten slag (B) and said discharge opening (42b) is located adjacent the lowest position of the hearth (12a).

2. A rectangular type of refuse melting furnace as claimed in claim 1, characterized in that the said refuse heating elements are electrodes or plasma torches.

3. A rectangular type of refuse melting furnace as claimed in claim 2, characterized in that said electrodes are arc discharging electrodes (21) for electric resistance heating electrodes.

## Patentansprüche

1. Abfallschmelzofen (11) von der rechteckigen Art, mit einem Ofengestell (12) von rechteckigem horizontalem Querschnitt welches zwei längere Seiten und zwei kürzere Seiten umfaßt, mit einer Ofenabdeckung (13), die an dem oberen Ende des Ofengestelles befestigt ist, und mit Abfall erhitzenden Elementen (21), die senkrecht durch die Ofenabdeckung hindurchgehend angeordnet sind, sowie mit einem Herd (12a), der, von den kürzeren Seiten des Ofengestelles her gesehen, einen abwärts gekrümmten transversalen Querschnitt aufweist; worin die Abfall erhitzenden Elemente in festgelegten Abständen entlang einer längsverlaufenden Mittellinie der Ofenabdeckung angeordnet sind, und Abfalleingänge (22) sind zwischen den Abfall erhitzenden Elementen durch die Ofenabdeckung hindurchführend angeordnet; und worin eine der längeren Seiten des Ofengestelles mit Auslauföffnungen (41) für geschmolzene Schlacke (B) ausgestattet ist, und eine der kürzeren Seiten des Ofengestelles ist mit einer Auslauföffnung (42) für geschmolzenes Metall (A) versehen, welche in unmittelbarer Nähe zu dem abwärts gekrümmten Herd angeordnet ist und im wesentlichen zentral in bezug auf die Querrichtung des Ofengestelles liegt, dadurch gekennzeichnet, daß die Auslauföffnung (42) für geschmolzenes Metall (A) abgegrenzt wird von einem oberen Endabschnitt einer Strömungsschranke (42a) mit Überlauf, und eine Auslaufmündung (42b) für geschmolzenes Metall (A) befindet sich in der Strömungsschranke (42a), und daß der obere Endabschnitt der Strömungsschranke (42a) in einer tieferen Position gelegen ist als die Auslauföffnungen (41) für geschmolzene Schlacke (B) und die Auslaufmündung (42b) grenzt an die tiefste Position des Herdes (12a).

2. Abfallschmelzofen von der rechteckigen Art nach Anspruch 1, dadurch gekennzeichnet daß die Abfall erhitzenden Elemente Elektroden oder Plasmabrenner sind.

3. Abfallschmelzofen von der rechteckigen Art nach Anspruch 2, dadurch gekennzeichnet daß die Elektroden Bogenentladungselektroden (21) für elektrische Widerstandsheizelektroden sind.

## Revendications

1. Four de fusion de déchets (11) du type rectangulaire, qui comprend un creuset de four (12) ayant une section transversale horizontale rectangulaire et comportant deux côtés plus longs et deux côtés plus courts, un couvercle de four (13), fixé au sommet dudit creuset de four, et des éléments de chauffage des déchets (21), disposés verticalement à travers le couverture dudit four, ainsi qu'une sole (12a) ayant, vue depuis les côtés plus courts dudit creuset de four, une section transversale incurvée vers le bas; dans lequel lesdits éléments de chauffage des déchets sont agencés à intervalles prédéterminés le long d'un axe médian longitudinal dudit couvercle de four, et des admissions de déchets (22) sont arrangées à travers ledit couvercle de four entre lesdits éléments de chauffage des déchets; et dans lequel l'un des côtés plus longs dudit creuset de four est pourvu d'embouchures de décharge (41) pour le laitier fondu (B), et l'un des côtés plus courts dudit creuset de four est pourvu d'une embouchure de décharge (42) pour le métal fondu (A), qui est placée tout près de la sole incurvée vers le bas et est substantiellement centrale par rapport à la direction transversale dudit creuset de four, caractérisé en ce que ladite embouchure de décharge (42) pour le métal fondu (A) est définie par une partie terminale supérieure d'une barrière d'écoulement (42a) par débordement, et un trou de coulée (42b) pour le métal fondu (A) est placé dans la barrière d'écoulement (42a), et en ce que ladite partie terminale supérieure de ladite barrière d'écoulement (42a) est placée dans une position plus basse que lesdites embouchures de décharge (41) pour le laitier fondu (B) et ledit trou de coulée (42b) est contigu à la position la plus basse de la sole (12a).

2. Four de fusion de déchets du type rectangulaire tel que revendiqué dans la revendication 1, caractérisé en ce que lesdits éléments de chauffage des déchets sont des électrodes ou des torches à plasma.

3. Four de fusion de déchets du type rectangulaire tel que revendiqué dans la revendication 2, caractérisé en ce que lesdites électrodes sont des électrodes à décharge en arc (21) pour des électrodes de chauffage par résistance électrique.
